# EUROPEAN PATENT APPLICATION

(11) **EP 1 939 228 A1**
(43) Date of publication of application: **02.07.2008**
(21) Application number: 06747242.3
(22) Date of filing: 02.06.2006
(51) Int. Cl.: C08F 8/30, B32B 27/32, B65D 65/40, C08F 8/44, C08F 20/06

(54) **GAS-BARRIER MATERIAL, PROCESS FOR PRODUCING THE SAME, AND GAS-BARRIER PACKAGING MATERIAL**

(30) Priority: 28.09.2005 JP 2005282008; 08.11.2005 JP 2005323298; 13.12.2005 JP 2005358790
(71) Applicant: Toyo Seikan Kaisha, Ltd., Tokyo 100-8522 (JP)
(72) Inventor: OBU, Yusuke, Yokohama-shi Kanagawa 240-0062 (JP); SASAKI, Hiroshi, Yokohama-shi Kanagawa 240-0062 (JP); ENDO, Aki, Yokohama-shi Kanagawa 240-0062 (JP)
(74) Representative: Manley, Nicholas Michael
(86) International application number: PCT/JP2006/311566
(87) International publication number: WO 2007/037044

(57) **Abstract**

A gas-barrier material comprising a polycarboxylic acid polymer (A) and a compound (B) having two ring structures (b) each of which forming an ether bond to carbon that forms a double bond with nitrogen and containing oxygen in the ether bond, wherein a crosslinked structure is formed by the reaction of a carboxyl group in the polycarboxylic acid polymer (A) with one of the ring structures (b) of the compound (B). The gas-barrier material features excellent gas-barrier property, retort resistance and flexibility, can be cured at a low temperature within short periods of time, and can be excellently produced.

## Description

### (Technical Field)

The present invention relates to a gas-barrier material obtained by using a crosslinking agent that comprises a compound having a particular functional group for a polycarboxylic acid polymer. More specifically, the invention relates to a gas-barrier material having gas-barrier property, retort resistance and flexibility, to a method of producing the same and to a packing material obtained by using the gas-barrier material.

### (Background Art)

A variety of gas-barrier resins have heretofore been used as represented, particularly, by polyvinylidene chloride, polyacrylonitrile and ethylene/vinyl alcohol copolymer. From the environmental reasons, however, use of the polyvinylidene chloride and the polyacrylonitrile has not been recommended while the ethylene/vinyl alcohol copolymer is accompanied by such problems that the gas-barrier property is much dependent upon the humidity and deteriorates under highly humid conditions.

To impart gas-barrier property to packing materials, there has also been known to use a film obtained by depositing an inorganic material on the surface of a base material. The deposited film, however, is very expensive and still involves problems with regard to flexibility and adhesion to the base material or to any other resin layer.

In order to solve the above problems, there have been proposed a gas-barrier film obtained by forming, on the base material, a film which comprises aqueous high molecules A, water-soluble or water-dispersing high molecules B and an inorganic stratified compound (JP-A-9-151264), a gas-barrier film obtained by applying a layer containing a metal compound onto the surface of a formed layer of a mixture of a poly(meth)acrylic acid polymer and polyalcohols (JP-A-2000-931) and a gas-barrier coating material containing a polyvinyl alcohol, an ethylene/maleic acid copolymer and a metal compound having a valency of two or more (JP-A-2004-115776).

### (Disclosure of the Invention)

The gas-barrier materials disclosed in the above prior arts may exhibit improved gas-barrier properties under highly humid conditions but are not still capable of meeting a variety of requirements as packing materials and are not satisfactory yet.

That is, in the gas-barrier film disclosed in the above JP-A-9-151264, the inorganic stratified compound is simply dispersed in the film. To obtain an excellent gas-barrier property, therefore, the inorganic stratified compound must be added in large amounts arousing a problem of a decrease in the mechanical strength and retort resistance. According to JP-A-2000-931, the gas-barrier film must be cured through the heat treatment conducted at a high temperature and for an extended period of time. The gas-barrier coating material disclosed in JP-A-2004-115776, too, must be heat-treated at a high temperature when it is to be cured in short periods of time. In particular, the gas-barrier materials disclosed in JP-A-2000-931 and JP-A-2004-115776 are accompanied by problems in regard to serious effect upon the plastic base material and productivity.

It is therefore an object of the present invention to provide a gas-barrier material which features excellent gas-barrier property, retort resistance and flexibility, which can be cured at a low temperature within short periods of time, and which can be excellently produced without accompanied by the above problems.

Another object of the present invention is to provide a method of producing the above gas-barrier material and a packing material by using the above gas-barrier material.

According to the present invention, there is provided a gas-barrier material comprising a polycarboxylic acid polymer (A) and a compound (B) having two ring structures each of which contains a double bond and an ether bond, the double bond being formed between a carbon atom and a nitrogen atom, the ether bond containing an oxygen atom and the carbon atom, wherein a crosslinked structure is formed by the reaction of a carboxyl group in said polycarboxylic acid polymer (A) with one of the ring structures.

In the gas-barrier material of the present invention, it is desired that:
1. At least one of the ring structures (b) contained in the compound (B) is an oxazoline group or a derivative thereof;
2. The compound (B) is a 2,2'-bis(2-oxazoline);
3. The polycarboxylic acid polymer (A) is a poly(meth)acrylic acid or a partly neutralized product thereof; and
4. The compound (B) is contained in an amount of 2 to 60 parts by weight per 100 parts by weight of the polycarboxylic acid polymer (A).

According to the present invention, there is further provided a gas-barrier material comprising the polycarboxylic acid polymer (A) and forming two amido ester bonds at the crosslinking portion.

According to the present invention, there is further provided a method of producing a gas-barrier material in which a metal ionic crosslinking is formed by polyvalent metal ions among the remaining unreacted carboxyl groups of the gas barrier material.

According to the present invention, there is further provided a method of producing a gas-barrier material in which a metal ionic crosslinking is formed among the remaining unreacted carboxyl groups by treating the gas-barrier material with water containing a polyvalent metal compound.

According to the present invention, there is further provided a method of producing a gas-barrier material by mixing together the polycarboxylic acid-type polyemer (A) having a water content of not larger than 15% and the compound (B).

In this method of producing the gas-barrier material, too, it is desired to treat the gas-barrier material that is formed with water containing the polyvalent metal compound to thereby form a metal ionic crosslinking among the remaining unreacted carboxyl groups.

According to the present invention, there is further provided a packing material having a layer of the gas-barrier material or of the metal ionically crosslinked gas-barrier material on the surface of the plastic base material or between the plastic layers.

In the packing material of the present invention, it is desired that:
1. the layer of the gas-barrier material or of the metal ionically crosslinked gas-barrier material is formed on the surface of a plastic base material via an anchoring layer, or at least one surface thereof is formed between the plastic layers via the anchoring layer; and
2. the anchoring layer contains an urethane polymer.

The gas-barrier material of the present invention exhibits excellent gas-barrier property and water resistance and, further, exhibits excellent gas-barrier property even after subjected to high temperature and wet heated conditions such as of retort sterilization, making it possible to impart retort resistance.

Further, the gas-barrier material of the invention makes it possible to easily form a crosslinked structure through the heating at a low temperature within a short period of time and, hence, to form an excellent gas-barrier material maintaining good productivity without adversely affecting the plastic base material.

Owing to its excellent flexibility, further, the gas-barrier material of the invention can be used as a flexible packing material without deteriorating the gas-barrier property caused by damaging the gas-barrier material, and the gas-barrier material can be formed on a plastic base material to obtain a multilayer pre-forming material, which can be further processed.

Upon introducing a metal ionic crosslinked structure among the carboxyl groups remaining unreacted after the crosslinking by using a crosslinking agent containing a polycarboxylic acid polymer and a particular functional group, further, it is made possible to strikingly improve the gas-barrier property under highly humid conditions.

By mixing together the pocarboxylic acid polymer
(A) having a water content of not larger than 15% and the compound (B), further, it is allowed to easily form a crosslinked structure at a low temperature and in a short period of time making it possible to further decrease adverse effect on the plastic base material, to shorten the time required for the production and to further decrease energy requirement.

By forming the gas-barrier material on the surface of the plastic base material via an anchoring layer or by forming the gas-barrier material between the plastic layers, the adhesion among the layers can be markedly enhanced, and the mechanical strength and flexibility of the packing material can be further improved.

### (Brief Description of the Drawings)

Fig. 1 is a view illustrating, in cross section, the structure of a laminate prepared in Example 1;
Fig. 2 is a view illustrating, in cross section, the structure of a laminate prepared in Example 9; and

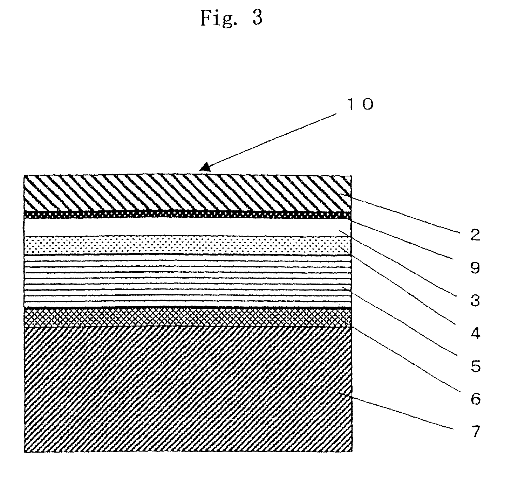

Fig. 3 is a view illustrating, in cross section, the structure of a laminate prepared in Example 11. Best Mode for Carrying Out the Invention

A gas-barrier material of the present invention comprises a polycarboxylic acid polymer (A) and a compound (B) having two ring structures (b) each of which forming an ether bond to carbon that forms a double bond with nitrogen and containing oxygen in the ether bond, wherein an important feature resides in that a crosslinked structure is formed by the reaction of a carboxyl group in the polycarboxylic acid polymer
(A) with one of the ring structures (b) of the compound (B).
   That is, in the gas-barrier material of the present invention as represented by the following formula (1), the carboxyl group in the polycarboxylic acid polymer (A) reacts with one of the ring structures (b) in the compound (B) to form an amido ester to thereby form a crosslinked film forming two amido ester bonds at the crosslinking portion imparting excellent gas-barrier property. 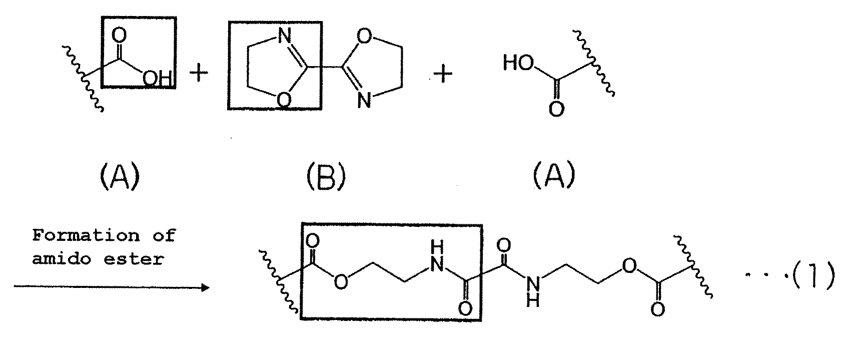
   The reasons why the gas-barrier material of the present invention exhibits excellent gas-barrier property are presumably due to that:
   i) The polymer which is a chief component is a polycarboxylic acid polymer and, hence, the carboxyl group on the side chain exhibits a high hydrogen-bonding property producing a strong cohesive force, making it possible to form a basic structure having excellent gas-barrier property;
   ii) An amido ester bond which is a structure effective in obtaining gas-barrier property is formed by the reaction of the carboxyl group on the polymer side chain with the ring structure (b) in the compound (B) which is a crosslinking component;
   iii) The ring structures (b) are existing in a number of two which is a minimum number required for forming the crosslinked structure and, hence, the structure at the crosslinked point spreads little three dimensionally, forming a densely crosslinked structure that exhibits excellent gas-barrier property; and
   iv) Use of the polycarboxylic acid polymer as the main component makes it possible to metal ionically crosslink the unreacted carboxyl groups that are not otherwise used for the crosslinking, to further improve gas-barrier property under highly humid conditions and to impart excellent gas-barrier property that does not deteriorate even under highly humid conditions.

Further, the polycarboxylic acid polymer (A) is crosslinked with the compound (B) at a low temperature and in a short period of time little affecting the plastic base material on which a gas-barrier material is to be formed, and offering a great advantage from the standpoint of productivity.

### [Polycarboxylic acid polymer (A)]

As the polycarboxylic acid polymer used for the gas-barrier material of the present invention, there can be exemplified polyacrylic acid, polymethacrylic acid, polymaleic acid, polyitaconic acid, a homopolymer or a copolymer of a monomer having a carboxyl group, such as acrylic acid/methacrylic acid copolymer, as well as partly neutralized products thereof. Desirably, however, there can be used polyacrylic acid or polymethacrylic acid.

The partly neutralized products of the polycarboxylic acid polymer can be partly neutralized with a metal hydroxide such as sodium hydroxide or potassium hydroxide, or ammonia.

Though there is no particular limitation, it is desired that the degree of neutralization of the partly neutralized product is not more than 30% as a mol ratio to the carboxyl groups. When the degree of neutralization exceeds the above range, the hydrogen-bonding property of the carboxyl group decreases and the gas-barrier property deteriorates.

Though there is no particular limitation, it is desired that the polycarboxylic acid polymer has a weight average molecular weight in a range of 2,000 to 5,000,000, preferably, 5,000 to 1,500,000 and, particularly, 10,000 to 1,000,000.

### [Compound (B)]

In the gas-barrier material of the present invention, the compound (B) used as a crosslinking agent for crosslinking the polycarboxylic acid polymer, has two ring structures (b) each of which forming an ether bond to carbon that forms a double bond with nitrogen and contains oxygen in the ether bond, i.e., each of which ring structure having a group -N=C-O- or an exoimino group with a portion =C-O- in the ring. Not being limited thereto only, however, there can be exemplified the following ring structures.

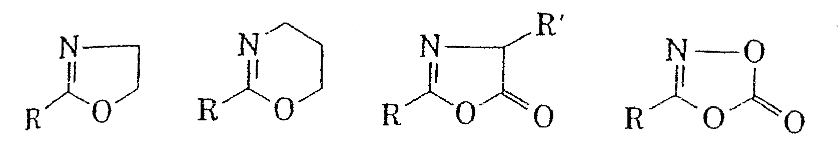

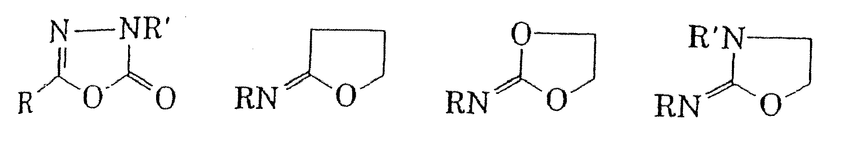

In the case of the ring structure without oxygen in the ether bond as represented by the following formula (2), 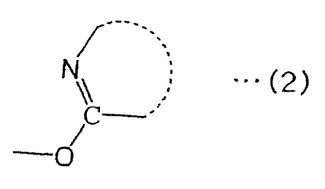 on the other hand, there takes place no crosslinking reaction for forming an amido ester bond to the polycarboxylic acid polymer. A single ring structure cannot form the crosslinking. When there are three or more ring structures, the structure at the crosslinking point expands three dimensionally failing to form a densely crosslinked structure having excellent gas-barrier property, which is not desirable. Because of these reasons, what are important are that a double bond is formed by nitrogen and carbon, carbon is forming an ether bond, an ether bond is formed to carbon that is forming a double bond with nitrogen and, in addition to these conditions, that there are contained two ring structures (b) each of which forming an ether bond to carbon that is forming a double bond with nitrogen, and containing oxygen in the ether bond.

The compound (B) used for the gas-barrier material of the present invention has two ring structures (b) that are described above. The two ring structures may be the same or different. Here, however, it is desired that at least one of them is an oxazoline group or a derivative thereof.

As the compound (B) having two such ring structures (b), through not limited thereto only, there can be exemplified bisoxazolines such as 2,2'-bis(2-oxazoline), 2,2'-bis(4-methyl-2-oxazoline), 2,2'-bis(5-methyl-2-oxazoline), 2,2'-bis(5,5'-dimethyl-2-oxazoline), 2,2'-bis(4,4,4',4'-tetramethyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4-dimethyl-2-oxazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-3,3'-diphenoxyethanebis(2-oxazoline), 2,2'-cyclohexylenebis(2-oxazoline) and 2,2'-diphenylenebis(2-oxazoline); and bisoxazines such as 2,2'-methylenebis(5,6-dihydro-4H-1,3-oxazine), 2,2'-ethylenebis(5,6-dihydro-4H-1,3-oxazine), 2,2'-propylenebis(5,6-dihydro-4H-1,3-oxazine), 2,2'-butylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine), 2,2'-m-phenylenebis(5,6-dihydro-4H-1,3-oxazine), 2,2'-naphthylenebis(5,6-dihydro-4H-1,3-oxazine), and 2,2'-p·p'-diphenylenebis(5,6-dihydro-4H-1,3-oxazine).

From the standpoint of mechanical properties and coloring, in the present invention, it is desired that the crosslinking portion formed by the polyacrylic acid polymer (A) and the compound (B) comprises an aliphatic chain. Among the above compounds (B), therefore, it is desired to use the one without aromatic ring and, particularly, to use 2,2'-bis(2-oxazoline).

### [Production of the gas-barrier material]

The gas-barrier material of the present invention can be produced by heating a coating composition containing the compound (B) in an amount of 2 to 60 parts by weight and, particularly, 4 to 40 parts by weight per 100 parts by weight of the polycarboxylic acid polymer (A) at a temperature of 110 to 170°C for 5 seconds to 5 minutes (peak-holding time) though these conditions may vary depending upon the kinds of the polycarboxylic acid polymer (A) and the compound (B) that are used or depending upon the amount of applying the coating composition.

The above coating composition can be prepared by dissolving the polycarboxylic acid polymer (A) and the compound (B) in water or by mixing together the aqueous solutions of the above components. In addition to water, there can be used a solvent such as alcohol or a mixed solvent such as of water/alcohol and the like.

There may be further added an acid catalyst to accelerate the reaction of the carboxyl group of the polycarboxylic acid polymer (A) with one of the ring structures (b) of the compound (B). As the acid catalyst, there can be used a monovalent acid such as acetic acid, propionic acid, ascorbic acid, benzoic acid, hydrochloric acid, paratoluenesulfonic acid or alkylbenzenesulfonic acid, and divalent or more highly valent acid such as sulfuric acid, sulfurous acid, phosphoric acid, phosphorous acid, hypophosphorous acid, polyphosphoric acid, pyrophosphoric acid, maleic acid, itaconic acid, fumaric acid or polycarboxylic acid.

To obtain the gas-barrier material of the invention, the coating composition may be directly formed into a sheet or a film which is, then, heated to form a crosslinked structure to thereby obtain the gas-barrier material. Or, the coating composition applied onto the base material is heated to form a crosslinked structure and is, thereafter, removed from the base material to obtain a gas-barrier material of a single layer. Or, the gas-barrier layer is formed on a plastic base material to obtain a multi-layered gas-barrier material.

In the gas-barrier material forming the crosslinked structure, the unreacted carboxyl groups are remaining without being used for forming the crosslinked structure. In the present invention, therefore, it is particularly desired to form a metal ionic crosslinking among the carboxyl groups that are remaining unreacted to decrease the amount of the unreacted carboxyl groups, to markedly improve water resistance, to further introduce the ionically crosslinked structure into the crosslinked structure of the polycarboxylic acid polymer, to impart more densely crosslinked structure and to strikingly improve gas-barrier property under particularly highly humid conditions.

It is desired that the metal ionic crosslinking is such that the carboxyl groups are crosslinked with metal ions in an amount corresponding to at least not smaller than an acid value of 100 mg/g KOH and, preferably, not smaller than 330 mg/g KOH in the gas-barrier material.

To form the metal ionic crosslinking among the unreacted carboxyl groups remaining in the gas-barrier material that is forming the crosslinked structure, the gas-barrier material is treated with water containing a polyvalent metal compound to easily form a metal ionically crosslinked structure.

Treatment with water containing the polyvalent metal compound can be executed by (i) a method of immersing the gas-barrier material in water containing the polyvalent metal compound, (ii) a method of spraying water containing the polyvalent metal compound onto the gas-barrier material, (iii) a method of placing the gas-barrier material under a highly humid condition after the treatment (i) or (ii), or (iv) a retort treatment with water containing the polyvalent metal compound (preferably, a method which brings the packing material into direct contact with hot water).

The above treatment (iii) is for imparting the effect of aging after the treatments (i) or (ii), and enables the treatment (i) or (ii) to be executed in a short period of time. In any of the treatments (i) to (iii), the treating water that is used may be cold water. In order for the water containing the polyvalent metal compound to act on the gas-barrier material, however, the temperature of the water containing the polyvalent metal compound is maintained to be not lower than 20°C and, particularly, from 40 to 100°C. In the case of the treatment (i) or (ii), the treating time is not shorter than 3 seconds and, particularly, about 10 seconds to about 4 days. In the case of the treatment (iii), the treatment (i) or (ii) is effected for not less than 0.5 seconds and, particularly, about one second to about one hour and, thereafter, the treatment by atmosphere by placing the gas-barrier material under a highly humid condition is conducted for not shorter than one hour and, particularly, about 2 hours to about 14 days. In the case of the above treatment (iv), the treating temperature is not lower than 101°C and, particularly, 120 to 140°C, and the treatment is conducted for not shorter than one second and, particularly, about 3 seconds to about 120 minutes.

Further, the gas-barrier material formed by using a coating solution in which the polyvalent metal compound has been dissolved or dispersed in advance, may similarly be treated with water or water which contains the polyvalent metal compound.

There is no particular limitation on the polyvalent metal ions so far as they are capable of crosslinking the carboxyl groups possessed by the resin. Desirably, however, the polyvalent metal ions have valencies of not smaller than 2 and, particularly, 2 to 3. Preferably, there can be used divalent metal ions such as magnesium ions Mg²⁺, calcium ions Ca²⁺ and the like ions.

As the metal ions, there can be exemplified alkaline earth metals (magnesium Mg, calcium Ca, strontium Sr, barium Ba, etc.), metals (iron Fe, ruthenium Ru, etc.) of the Group 8 of periodic table, metals (copper Cu, etc.) of the Group 11 of periodic table, metals (zinc Zn, etc.) of the Group 12 of periodic table, and metals (aluminum Al, etc.) of the Group 13 of periodic table. As the divalent metal ions, there can be exemplified magnesium ions Mg²⁺, calcium ions Ca²⁺, strontium ions Sr²⁺, barium ions Ba²⁺, copper ions Cu²⁺ and zinc ions un²⁺. As the trivalent metal ions, there can be exemplified aluminum ions Al³⁺ and iron ions Fe³⁺. The metal ions can be used in one kind or in a combination of two or more kinds. As the water-dissociating metal compound which is a source of the above polyvalent metal ions, there can be exemplified metal salts constituting the above metal ions, such as halides (e.g., chlorides like magnesium chloride and calcium chloride), hydroxides (e.g., magnesium hydroxide, calcium hydroxide), oxides (e.g., magnesium oxide, calcium oxide), carbonates (e.g., magnesium carbonate, calcium carbonate), inorganic acid salts such as perhalogenates (e.g., perchlorates like magnesium perchlorate and calcium perchlorate), sulfates, sulfites (e.g., magnesium sulfonate, calcium sulfonate), nitrates (e.g., magnesium nitrate, calcium nitrate), hypophosphite, phosphite, phosphates (e.g., magnesium phosphate, calcium phosphate), organic acid salts such as carboxylates (e.g., acetates like magnesium acetate and calcium acetate).

These metal compounds can be used in one kind or in a combination of two or more kinds.

Among these compounds, further, it is desired to use halides and hydroxides of the above metals.

It is desired that the polyvalent metal compound is present in water in an amount of not smaller than 0.125 mmols/L, desirably, not smaller than 0.5 mmols/L and, more desirably, not smaller than 2.5 mmols/L calculated as metal atoms.

In any treatment, further, it is desired that the water containing the polyvalent metal compound is neutral to alkaline.

The gas-barrier material of the present invention may contain an inorganic dispersant in addition to the above gas-barrier resin. The inorganic dispersant has a function of blocking the water content from the outer side and protecting the gas-barrier resin, and works to further improve the gas-barrier property and water resistance.

The inorganic dispersant may have any shape such as spherical shape, needle-like shape or stratified shape, but is the one that exhibits wettability to the gas-barrier resin and favorably disperses in the coating solution. From the standpoint of blocking the water content, in particular, there is preferably used a silicate compound having a stratified crystal structure, such as water-swelling mica or clay. It is desired that the inorganic dispersant has an aspect ratio of not smaller than 30 but not larger than 5,000 from the standpoint of being dispersed in a stratified manner to block the water content.

It is desired that the inorganic dispersant is contained in an amount of 5 to 100 parts by weight per 100 parts by weight of the gas-barrier resin.

The gas-barrier material of the present invention has a gas-barrier ability sufficient for use as a retort packing material, and exhibits excellent gas-barrier property permitting oxygen to pass through in an amount of not larger than 10 cc/m²/day/atm (in an environment of 25°C and 80%RH) even after subjected to the retort, as well as excellent retort resistance.

To obtain the gas-barrier material of the invention at a low temperature and in a short period of time, the coating composition may be prepared by mixing the polycarboxylic acid polymer (A) having a water content of not larger than 15% and the compound (B) together. To suppress the water content to be not larger than 15%, the polycarboxylic acid polymer may be put to the dehydration treatment such as heating or reduction of pressure prior to preparing the coating composition. It is desired that the water content is not larger than 15% and, particularly, not larger than 10%.

By carrying out the production method of the invention, the coating composition needs be heated at a low temperature for a short period of time, i.e., at a temperature of 110 to 170°C for 0 to 60 seconds (peak-holding temperature), further suppressing adverse effect of heating on the plastic base material, shortening the time required for the production and consuming energy in decreased amounts.

The dehydration treatment can be effected to a sufficient degree in an electric oven being heated at a temperature of 140 to 180°C for about 5 to about 20 minutes. Moreover, any other heating means may be employed. There may be further executed a processing such as a reduction of pressure or a combination of heating with the reduction of pressure.

The water content in the polycarboxylic acid polymer is found based on the Karl Fischer's method. The water content found by the Karl Fischer's method varies depending upon the conditions for heating the polycarboxylic acid polymer for vaporizing the water content. If the heating condition is set to be lower than 200°C, the amount of water (amount of free water) adsorbed by the polycarboxylic acid polymer can be grasped. However, it becomes difficult to find the water content inclusive of the water content possessed as structural water by the polycarboxylic acid polymer which has a high hydrogen-bonding property. When the heating condition exceeds 250°C, on the other hand, the polycarboxylic acid polymer tends to be decomposed to a striking degree, which is not desirable. Therefore, to find the water content inclusive of both the free water and the structural water, it is considered that a preferred range of the heating condition is 200 to 250°C. As for the water content in the present invention, the heating condition is set to be 230°C for vaporizing the water content.

When the production method of the present invention is employed, the solvent used in the step of preparing the coating composition must be chiefly the one other than water, i.e., must be the one having a heat capacity for volatilization smaller than that water. Preferred examples of the solvent include methanol, ethanol and isopropanol. Among them, methanol is particularly desired.

### (Packing material)

In the packing material of the present invention, the gas-barrier material is formed on the surface of the plastic substrate or between the plastic layers.

As the plastic base material, there can be exemplified any packing material in the form of a film, a sheet, a bottle, a cup, a tray or a can obtained from a thermoplastic resin that can be heat-formed by extrusion forming, injection forming, blow forming, draw-blow forming or press forming.

Suitable examples of the resin constituting the plastic base material include olefinic polymers such as low-, intermediate- or high-density polyethylene, linear low-density polyethylene, polypropylene, ethylene/propylene copolymer, ethylene/butene copolymer, ionomer, ethylene/vinyl acetate copolymer and ethylene/vinyl alcohol copolymer; polyesters such as polyethylene terephthalate, polybutylene terephthalate, polyethylene terephthalate/isophthalate and polyethylene naphthalate; polyamides such as nylon 6, nylon 6,6, nylon 6,10 and metaxylylene adipamide; styrene polymers such as polystyrene, styrene/butadiene block copolymer, styrene/acrylonitrile copolymer and styrene/butadiene/acrylonitrile copolymer (ABS resin); vinyl chloride copolymers such as polyvinyl chloride, and vinyl chloride/vinyl acetate copolymer; acrylic copolymers such as polymethyl methacrylate, methyl methacrylate/ethyl acrylate copolymer; and polycarbonate.

These thermoplastic resins may be used in a single kind or in the form of a blend of two or more kinds. Further, the plastic base material may be of a single-layer constitution or a laminated-layer constitution of two or more layers obtained by co-melt extrusion or based on any other lamination.

To the above melt formable and thermoplastic resin, there may, as required, be added one or two or more kinds of additives such as pigment, antioxidant, antistatic agent, ultraviolet absorber or lubricant in a total amount in a range of 0.001 part to 5.0 parts per 100 parts by weight of the resin, as a matter of course.

In order to reinforce the container, furthermore, there may be blended a fibrous reinforcing material such as glass fiber, aromatic polyamide fiber, carbon fiber, pulp or cotton linter; powdery reinforcing material such as carbon black or white carbon; or flake-like reinforcing material such as glass flakes or aluminum flakes, in one kind or in two or more kinds in a total amount of 2 to 150 parts by weight per 100 parts by weight of the thermoplastic resin. As a filler, further, there may be added one or two or more kinds of heavy to soft calcium carbonate, mica, talc, kaolin, gypsum, clay, barium sulfate, alumina powder, silica powder and magnesium carbonate in a total amount of 5 to 100 parts by weight per 100 parts by weight of the thermoplastic resin according to a known recipe.

In order to improve the gas-barrier property, further, there may be added scale-like inorganic fine powder, such as water-swelling mica or clay in a total amount of 5 to 100 parts by weight per 100 parts by weight of the thermoplastic resin according to a known recipe.

According to the present invention, the above-mentioned gas-barrier material can be provided on the surface of the final film, sheet or container, or the film thereof can be formed in advance on a pre-formed article that is to be formed into a container. As the pre-formed articles, there can be exemplified a cylindrical parison with or without bottom which is to be biaxially draw-blow formed, a pipe which is to be formed into a plastic can, a sheet to be put to the vacuum forming, compressed air forming, or plug-assisted forming, as well as a heat-sealed closure, and a film for forming bags and pouches.

In the packing material of the present invention, it is desired that the gas-barrier material, usually, has a thickness of 0.1 to 10 µm and, particularly, 0.5 to 5 µm. When the thickness is smaller than the above range, the oxygen-barrier property often becomes insufficient. Even when the thickness exceeds the above range, on the other hand, there is not obtained any particular advantage but rather disadvantage is brought about from the standpoint of cost of the packing material. The gas-barrier material can be provided as a single layer on the inner surface of the container, on the outer surface of the container and as an intermediate layer of a laminated body and can, further, be provided as a multiplicity of layers on the inner and outer surfaces of the container, or on either the inner surface or the outer surface of the container and as the intermediate layer of the laminated body, as a matter of course.

The film-coated pre-formed article can be formed into a final container under the conditions known per se. such as biaxial draw-blow forming or plug-assisted forming. Further, the film or sheet coated with a layer may be stuck to another film or sheet to form a laminated body which is, then, used as a pre-formed article from which heat-sealed closures, pouches and containers are to be formed.

### [Anchoring layer]

When used as the packing material, at least the one surface of the layer comprising the gas-barrier material may be provided with an anchoring layer. Provision of the anchoring layer enhances the adhesion between the layers to further improve mechanical strength of the container and the flexibility of the laminated body. When the layer of the gas-barrier material is to be used as the inner and outer surfaces of the container or as the outermost layer of the laminated body, the layer of the gas-barrier material may be formed via the anchoring layer. When the layer of the gas-barrier material is to be formed as the intermediate layer of the laminated body, the anchoring layer may be formed on at least one surface of the layer of the gas-barrier material.

In the packing material of the present invention, the anchoring member can be comprised of various polymers such as those of urethane type, epoxy type, acrylic type and polyester type. It is particularly desired that the packing material of the invention contains an urethane polymer.

Further, the anchoring member may be comprised of a chief agent and a curing agent, and may be a precursor in a state where the curing reaction has not been completed or in a state where the curing agent is present in an excess amount. In the case of the urethane type, for example, the anchoring member is chiefly constituted by a polyol component such as polyester polyol or polyether polyol, and a polyisocyanate component. The polyisocyanate component may be present in such an amount that the number of the isocyanate groups in the polyisocyanate component is greater than the number of the hydroxyl groups in the polyol component.

It is desired that the polyol component used for forming the urethane-type polymer is a polyester polyol. As the polyester polyol, there can be exemplified the one obtained by the reaction of a polyvalent carboxylic acid, a dialkyl ester thereof or a mixture thereof with glycols or with a mixture thereof.

As the polyvalent carboxylic acid, there can be exemplified aromatic polyvalent carboxylic acids such as isophthalic acid, terephthalic acid and naphthalenedicarboxylic acid; and aliphatic polyvalent carboxylic acids such as adipic acid, azelaic acid, sebacic acid and cyclohexanedicarboxylic acid.

As the glycol, there can be exemplified ethylene glycol, propylene glycol, diethylene glycol, butylene glycol, neopentyl glycol and 1,6-hexane diol.

It is desired that the polyester polyol has a glass transition temperature of -50°C to 100°C and, preferably, -20°C to 80°C. It is further desired that the polyester polyol has a number average molecular weight of 1,000 to 100,000 and, preferably, 3,000 to 80,000.

As the polyisocyanate used for forming the urethane-type polymer, there can be exemplified aromatic polyisocyanates such as 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-bzphenylene diisocyanate, 3,3'-dichloro-4,4'-biphenylene diisocyanate, 1,5-naphthalene diisocyanate, 1,5-tetrahydronaphthalene diisocyanate, xylylene diisocyanate and tetramethylxylylene disocyanate; aliphatic polyisocyanates such as tetramethylene diisocyanate, 1,6-hexamethylene diisocyanate, dodecamethylene diisocyanate, trimethylhexamethylene diisocyanate, 1,3-cyclohexylene diisocyanate, 4-cyclohexylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate; polyfunctional polyisocyanate compounds such as isocyanurate derived from the above polyisocyanate monomer, binret and allophanate; and polyfunctional polyisocyanate compounds containing a terminal isocyanate group obtained by the reaction with a trifunctional or more highly functional polyol compound such as trimethylolpropane or glycerin.

In the packing material of the present invention, though there is no limitation, the anchoring layer is formed by heating a coating composition which contains a polyisocyanate in an amount of 1 to 100 parts by weight and, particularly, 5 to 80 parts by weight per 100 parts by weight of the above-mentioned polyester polyol at a temperature of 60 to 170°C for 2 seconds to 5 minutes depending upon the kinds of the polyester polyol and the polyisocyanate and depending upon the amount of applying the coating composition.

The above coating composition can be prepared by dissolving the polyester polyol and the polyisocyanate in a solvent such as toluene, MEK, cyclohexanone, Sorbesso, isophorone, xylene, ethyl acetate or butyl acetate which is used in one kind or in a mixed solution thereof, or can be prepared by mixing together the solutions of the above components. In addition to the above components, there can be used widely known cure promoting catalyst, filler, softening agent, anti-aging agent, stabilizer, adhesion promoter, leveling agent, defoaming agent, plasticizer, inorganic filler, stickiness-imparting resin, fibers, coloring agent such as pigment, and a usable time extender.

It is desired that the thickness of the anchoring layer is 0.01 to 10 µm, preferably, 0.05 to 5 µm and, more preferably, 0.1 to 3 µm. When the thickness is smaller than the above range, the effect of the anchoring layer does not often contribute to the adhesiveness. When the thickness becomes greater than the above range, on the other hand, no distinguished advantage is obtained but rather disadvantage is brought about from the standpoint of cost of the packing material.

In the packing material of the invention, if the anchoring layer is provided to enhance the adhesion between the layers, the laminated body exhibits further enhanced flexibility and does not permit an increase in the oxygen permeation amount after the laminated body is repetitively folded.

### EXAMPLES

The invention will be further described by way of Working Examples to which only, however, the invention is in no way limited.

### (Amount of oxygen permeation)

The amounts of oxygen that has permeated through the laminated body of the obtained plastic films were measured by using an oxygen permeation measuring instrument (OX-TRAN2/20, manufactured by Modern Control Co.). The amounts of oxygen that has permeated were also measured after having conducted the retort sterilization treatment at 120°C for 30 minutes. The measuring conditions were an environmental temperature of 25°C and a relative humidity of 80%.

### (Example 1)

A polyacrylic acid (25% aqueous solution manufactured by Wako Junyaku Co.) was used as the polycarboxylic acid polymer (A), dry-solidified under a reduced pressure, and was immediately dissolved in ethanol to obtain an (ethanol/water) solution (I) containing 18.7% of solid component. The solvent composition consisted of ethanol/water = 80/1.3 as a weight ratio. Further, a 2,2'-bis(2-oxazoline)(manufactured by Tokyo Kasei Co.) was used as the compound (B), and was dissolved in a mixed solvent of ethanol/water (= 16/3, weight ratio) to obtain an (ethanol/water) solution (II) having a solid content of 5%. The solutions (I) and (II) were so mixed together that the amount of the compound (B) was 5% by weight relative to the polycarboxylic acid polymer (A), and were further so adjusted that the solid content was 10% and that the weight ratio of the mixed solvent was ethanol/water = 85/15 followed by stirring to prepare a coating solution.

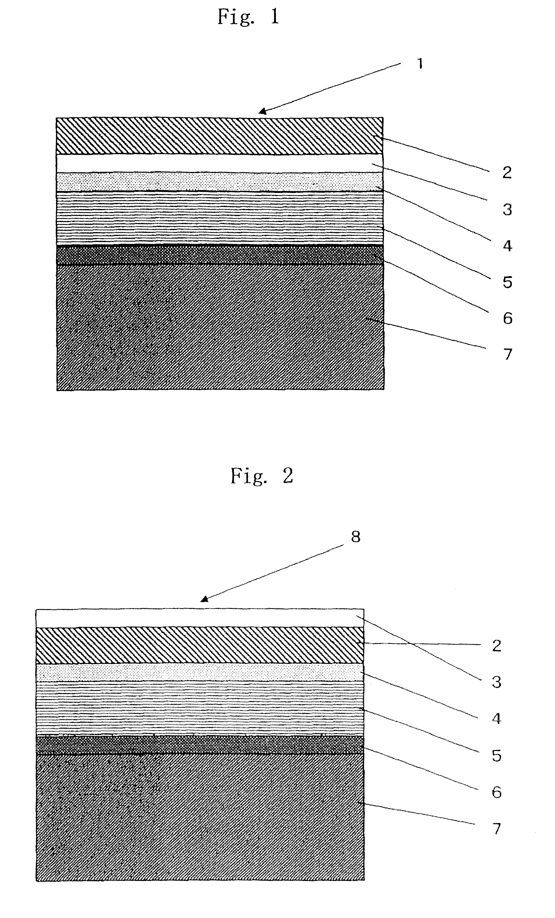

By using a bar coater, the above coating solution was applied onto a biaxially drawn polyethylene terephthalate film 2 having a thickness of 12 µm. After the application, the above film was heat-treated in a gas oven under the conditions of a peak temperature of 140°C and a peak temperature-holding time of 60 seconds to obtain a polyethylene terephthalate film having a coating layer 3 of a thickness of 2 µm. Into the tap water maintained at 50°C, calcium chloride was added in an amount of 3.75 mmols calculated as metal atoms per a liter of tap water, and the above film was immersed therein a whole day. After taken out from the hot water and dried, the film was placed with the coating layer as the lower layer. Onto the film were successively laminated an arethane-type adhesive 4 in a thickness of 2 µm, a biaxially drawn nylon film 5 in a thickness of 15 µm, an urethane-type adhesive 6 in a thickness of 2 µm and an undrawn polypropylene film 7 in a thickness of 70 µm to obtain a laminated body 1 of a layer structure as shown in Fig. 1.

### (Example 2)

A laminated body was obtained by the same method as that of Example 1 with the exception of mixing the solutions (I) and (II) so that the amount of the compound (B) was 10% by weight relative to the polycarboxylic acid polymer (A).

### (Example 3)

A laminated body was obtained by the same method as that of Example 1 with the exception of mixing the solutions (I) and (II) so that the amount of the compound (B) was 20% by weight relative to the polycarboxylic acid polymer (A).

### (Example 4)

A laminated body was obtained by the same method as that of Example 1 with the exception of mixing the solutions (I) and (II) so that the amount of the compound (B) was 40% by weight relative to the polycarboxylic acid polymer (A).

### (Example 5)

A laminated body was obtained by the same method as that of Example 1 with the exception of mixing the solutions (I) and (II) so that the amount of the compound (B) was 60% by weight relative to the polycarboxylic acid polymer (A) and that the solid content was 8%.

### (Example 6)

A polyacrylic acid (25% aqueous solution manufactured by Wako Junyaku Co.) was used as the polycarboxylic acid polymer (A), and 5 mol% thereof was neutralized by the addition of a 0.5 N sodium hydroxide aqueous solution with good stirring. To the above aqueous solution was added the solution (II) of Example 1 so that the amount of the compound (B) was 10% by weight relative to the polycarboxylic acid polymer (A), which was, then, diluted with ethanol so that the solid content was 10% to thereby prepare a coating solution.

By using the above coating solution, a laminated body was obtained by the same method as that of Example 1.

### (Example 7)

A polyethylene terephthalate film having a coating layer was obtained by the same method as that of Example 1 with the exception of so mixing the solutions (I) and (II) together that the amount of the compound (B) was 10% by weight relative to the polycarboxylic acid polymer (A). The above film was retort-treated with the tap water at 120°C for 30 minutes, and was taken out, dried and laminated by the same method as that of Example 1 to obtain a laminated body.

### (Example 8)

A polyethylene terephthalate film having a coating layer was obtained by the same method as that of Example 1 with the exception of so mixing the solutions (I) and (II) together that the amount of the compound (B) was 20% by weight relative to the polycarboxylic acid polymer (A). A solution obtained by adding calcium chloride in an amount of 7.5 mmols calculated as metal atoms to a liter of the tap water, was uniformly sprayed onto the surface of the above coating layer for 5 seconds. Immediately thereafter, the film was left to stand in a container maintained in an environmental temperature of 50°C at a relative humidity of 100% for 10 days. After taken out and dried, the film was laminated by the same method as that of Example 1 to obtain a laminated body.

### (Example 9)

A polyethylene terephthalate film having a coating layer having a coating layer 3 on a 12 µm-thick biaxially drawn polyethylene terephthalate film 2 was obtained by the same method as that of Example 1 with the exception of so mixing the solutions (I) and (II) together that the amount of the compound (B) was 20% by weight relative to the polycarboxylic acid polymer (A). With the coating layer as the upper layer, there were successively laminated an urethane-type adhesive 4 in a thickness of 2 µm, a biaxially drawn nylon film 5 in a thickness of 15 µm, an urethane-type adhesive 6 in a thickness of 2 µm and an undrawn polypropylene film 7 in a thickness of 70 µm to obtain a laminated body 8 of a layer structure as shown in Fig. 2. Into the tap water maintained at 50°C, calcium chloride was added in an amount of 2.5 mmols per a liter of tap water, and the above laminated body was immersed therein for 14 hours, and was taken out from the hot water and dried.

### (Example 10)

A laminated body was obtained by the same method as that of Example 1 with the exception of so mixing the solutions (I) and (II) together that the amount of the compound (B) was 20% by weight relative to the polycarboxylic acid polymer (A) and that the polyethylene terephthalate film having the coating layer was not immersion-treated.

### (Comparative Example 1)

A laminated body was obtained by the same method as that of Example 1 with the exception of using a coating solution prepared by using a polyacrylic acid (25% aqueous solution manufactured by Wako Junyaku Co.) as the polycarboxylic acid polymer (A) and an ethylene glycol as the compound (B), so mixing them together that the amount of (B) was 10% by weight relative to (A) followed by dilution with water, so that the solid content was 10%.

### (Comparative Example 2)

A laminated body was obtained by the same method as that of Example 1 with the exception of using a coating solution prepared by using a carbodiimide compound (40% aqueous solution of Carbodirite V-02 manufactured by Nisshinbo Co.) as the compound (B) in an amount of 40% by weight relative to the polycarboxylic acid polymer (A) followed by dilution with water, so that the solid content was 10%.

### (Comparative Example 3)

A laminated body was obtained by the same method as that of Example 1 with the exception of using a coating solution prepared by using an isocyanate compound (WD-730 manufactured by Mitsui-Takeda Chemical Co.) as the compound (B) in an amount of 20% by weight relative to the polycarboxylic acid polymer (A) followed by dilution with water, so that the solid content was 10%.

### (Comparative Example 4)

A laminated body was obtained by the same method as that of Example 1 with the exception of using a solution (II) of a propylene glycol diglycidyl ether (Denacol EX-911M manufactured by Nagase Chemtex Co.) as the compound (B), mixing the solutions (I) and (II) together so that the amount of the propyleneglycol diglycidyl ether was 13% by weight with respect to the polycarboxylic acid polymer (A), and adding a paratoluenesulfonic acid in an amount of 3% by weight with respect to the polycarboxylic acid polymer (A).

Table 1 shows the measured results of the amounts of oxygen that has permeated through the laminated bodies obtained in Examples 1 to 10 and in Comparative Examples 1 to 4 before and after the retort treatment. Examples 1 to 10 all exhibited good barrier properties before and after the retort treatment.

### (Evaluation of Flexibility)

After subjected to the retort sterilization treatment at 120°C for 30 minutes, a laminated body of the obtained plastic films was cut into a size of 130 mm x 100 mm, formed into a cylinder of a diameter of 30 mm and a length of 130 mm and was mounted on a Gerboflex tester. A crash treatment was conducted 100 times by using the Gerboflex tester in an environment of a temperature of 23°C and a relative humidity of 50%RH. The crash treatment of one time consisted of a twisting motion (twisting angle of 180° and a length of motion of 60 mm) and a horizontal motion (length of motion of 20 mm).

Thereafter, the amount of oxygen permeation was measured as described above and was compared with the amount of oxygen permeation before the crash treatment, i.e., compared with the amount of oxygen permeation after the retort sterilization treatment.

### (Example 11)

A polyester polyol (Byron 200 manufactured by Toyoboseki Co.) was dissolved in an ethyl acetate/MEK mixed solvent(weight ratio of 60/40) in an amount of 20% by weight. Into the solution, a polyisocyanate (Sumijule N3300 manufactured by Sumika Bayer Urethane Co.) and a di-n-butyltin dilaurate (manufactured by Wako Junyaku Co.) were added in amounts of 60% by weight and 0.8% by weight with respect to the polyester polyol followed by the dilution with the above mixed solvent, so that the solid content was 14% by weight to thereby prepare a coating solution for forming the anchoring layer.

By using a bar coater, the above coating solution was applied onto a 12 µm-thick biaxially drawn polyethylene terephthalate film 2, was heat-treated in a gas oven under the conditions of a peak temperature of 80°C and a peak temperature-holding time of 10 seconds to obtain a polyethylene terephthalate film having an anchoring layer 9 of a thickness of 0.5 µm.

The coating solution of Example 2 was applied onto the above film as a base material to obtain a laminated body 10 by the same method as that of Example 1.

### (Comparative Example 5)

A laminated body was obtained by the same method as that of Example 11 but without forming anchoring layer.

Table 2 shows the measured results of the amounts of oxygen permeation before and after the retort-treated laminated bodies obtained in Example 11 and in Comparative Examples 5 were subjected to the crash treatment 100 times by using the Gerboflex tester. Example 11 exhibited good barrier property permitting a little increase in the amount of oxygen permeation even after the crash treatment.

### (Measurement of water content)

The polycarboxylic acid polymer (A) was subjected to a predetermined dehydration treatment and, when cooling was necessary, was quickly transferred into a desiccator containing silica gel in sufficient amounts and was left to cool. After cooled down to near room temperature, the water content of the polycarboxylic acid polymer (A) was measured by using a a coulometric titration water content-measuring apparatus (Model CA-06 manufactured by Mitsubishi Kagaku Co.) relying upon the Karl Fischer's method. The heating temperature for evaporating the water content was 230°C.

### (Evaluation of resistance against hot water)

A predetermined coating solution was applied onto a 12 µm-thick biaxially drawn polyethylene terephthalate film, and was heat-treated under a predetermined heat-treating conditions to obtain a polyethylene terephthalate film having a coating layer of a thickness of 2 µm. The film was subjected to the retort sterilization treatment at 120°C for 30 minutes and, thereafter, the surfaces of the film were washed and dried. When the thickness of the coating layer has decreased by more than 10% as compared to before the retort sterilization, the resistance against hot water was regarded to be X. When a decrease in the thickness was smaller than 10%, the resistance against hot water was regarded to be ○.

### (Example 12)

A polyacrylic acid (AC-10LHP manufactured by Nihon Junyaku Co.) was used as the polycarboxylic acid polymer (A), was heat-treated in an electric oven at 170°C for 10 minutes, and was quickly added to a methanol solvent and was dissolved therein so that the solid content was 15% to thereby obtain a solution (III). Further, a 2,2'-bis(2-oxazoline) (manufactured by Tokyo Kasei Co.) was used as the compound (B) to obtain a methanol solution (IV) thereof having a solid content of 5%. The solutions (III) and (IV) were mixed together so that the amount of the compound (B) was 10% by weight with respect to the polycarboxylic acid polymer (A), and were further adjusted with methanol with good stirring so that the solid content was 8% to thereby obtain a coating solution.

The above coating solution was applied by using a bar coater onto a 12 µm-thick biaxially drawn polyethylene terephthalate film 2, and was heat-treated in an electric oven under the conditions of a peak temperature of 140°C and a peak temperature-holding time of 0 second to obtain a polyethylene terephthalate film having a coating layer 3 of a thickness of 2 µm.

### (Comparative Example 6)

A polyacrylic acid (25% aqueous solution manufactured by Wako Junyaku Co.) was used as the polycarboxylic acid polymer (A), was dried and solidified under a reduced pressure, and was quickly dissolved in methanol to obtain a methanol solution (V) having a solid content of 18%. Further, the above solution (IV) was used as the compound (B), and the solutions (V) and (IV) were mixed together so that the amount of the compound (B) was 10% by weight relative to the polycarboxylic acid polymer (A) followed by adjustment with methanol with good stirring so that the solid content was 13% to thereby obtain a coating solution.

A polyethylene terephthalate film having a coating layer of a thickness of 2 µm was obtained by the same method as that of Example 12 but using the above coating solution.

Table 3 shows the water contents, resistance against hot water and barrier properties of the polyethylene terephthalate films having the coating layers obtained in Example 12 and in Comparative Example 6. Example 12 exhibits good resistance against hot water and good barrier properties.

**Table 1-1**

| | Polycarboxylic acid polymer (A) | | Compound (B) | |
|---|---|---|---|---|
| | | Neutralization | | Amount (% by wt) |
| Ex. 1 | polyacrylic acid | no | 2,2'-bis(2-oxazoline) | 5 |
| Ex. 2 | polyacrylic acid | no | 2,2'-bis(2-oxazoline) | 10 |
| Ex. 3 | polyacrylic acid | no | 2,2'-bis(2-oxazoline) | 20 |
| Ex. 4 | polyacrylic acid | no | 2,2'-bis(2-axazaline) | 40 |
| Ex. 5 | polyacrylic acid | no | 2,2'-bis(2-axazaline) | 60 |
| Ex. 6 | polyacrylic acid | yes | 2,2'-bis(2-oxazaline) | 10 |
| Ex. 7 | polyacrylic acid | no | 2,2'-bis(2-oxazoline) | 10 |
| Ex. 8 | polyacrylic acid | no | 2,2'-bis(2-oxazoline) | 20 |
| Ex. 9 | polyacrylic acid | no | 2,2'-bis(2-oxazoline) | 20 |
| Ex. 10 | polyacrylic acid | no | 2,2'-bis(2-oxazoline) | 20 |
| Comp.Ex.1 | polyacrylic acid | no | ethylene glycol | 10 |
| Comp.Ex.2 | polyacrylic acid | no | carbodiimide compound | 40 |
| Comp.Ex.3 | polyacrylic acid | no | isocyanate compound | 20 |
| Comp.Ex.4 | polyacrylic acid | no | propyleme glycol diglycidyl ether | 13 |
| Uncoated laminate | --- | -- | ---- | -- |

**Table 1-2**

| | Formation of ionic crosslinking | Barrier layer position in the laminate | O₂ permeation amount (cc/m²/day/atm) | | Remarks |
|---|---|---|---|---|---|
| | | | Before retort | After retort | |
| Ex.1 | immersed | lower layer | 0.2 | 0.3 | |
| Ex.2 | immersed | lower layer | 0.2 | 0.2 | |
| Ex.3 | immersed | lower layer | 0.5 | 0.6 | |
| Ex.4 | immersed | lower layer | 1.5 | 1.2 | |
| Ex.5 | immersed | lower layer | 3.9 | 3.1 | |
| Ex.6 | immersed | lower layer | 0.4 | 0.3 | |
| Ex.7 | retort | lower layer | 0.2 | 0.3 | |
| Ex.8 | spray/atmosphere | lower layer | 1.5 | 0.9 | |
| Ex.9 | immersed | surface layer | 0.8 | 0.9 | |
| Ex.10 | -- | lower layer | 7.2 | 3.5 | |
| Comp.Ex.1 | -- | lower layer | 65 | - | film dissolved during retort |
| Comp.Ex.2 | immersed | lower layer | 70 | 130 | |
| Comp.Ex.3 | immersed | lower layer | 70 | 130 | |
| Comp.Ex.4 | immersed | lower layer | 1 2 | 100 | |
| Uncoated laminate | -- | --- | 70 | 130 | |

**Table 2**

| | Polycarboxylic acid polymer (A) | | Compound (B) | | Formation of ionic crosslinking | Barrier layer position in the laminate | Anchor layer | O₂ permeation amount (cc/m²/day/atm) | |
|---|---|---|---|---|---|---|---|---|---|
| | | Neutralization | | Amount (% by wt) | | | | Before crashing | After crashed 100 times |
| Ex.11 | polyacrylic acid | no | 2,2'-bis(2-oxazoline) | 10 | immersed | lower layer | yes | 0.2 | 5.3 |
| Comp. Ex.5 | polyacrylic acid | no | 2,2'-bis(2-oxazoline) | 10 | immersed | lower layer | no | 0.2 | 9.8 |

**Table 3**

| | Polycarboxylic acid polymer (A) | | Compound (B) | | Water content (%) | Resistance against hot water | O₂ permeation amount (cc/m²/day/atm) |
|---|---|---|---|---|---|---|---|
| | | Neutralization | | Amount (% by wt) | | | |
| Ex. 12 | polyacrylic acid | no | 2,2'-bis(2-oxazoline) | 10 | 11 | o | 0.5 |
| Camp.Ex.6 | palyacrylic acid | no | 2,2'-bis(2-oxazoline) | 10 | 18 | X | note) |

| | | | | | | | |
|---|---|---|---|---|---|---|---|
| note) Not measured for film has dissolved. | | | | | | | |

## Claims

1. A gas-barrier material comprising a polycarboxylic acid polymer (A) and a compound (B) having two ring structures each of which contains a double bond and an ether bond, the double bond being formed between a carbon atom and a nitrogen atom, the ether bond containing an oxygen atom and the carbon atom, wherein a crosslinked structure is formed by the reaction of a carboxyl group in said polycarboxylic acid polymer (A) with one of the ring structures.

2. A gas-barrier material according to claim 1, wherein at least one of the ring structures (b) contained in said compound (B) is an oxazoline group or a derivative thereof.

3. A gas-barrier material according to claim 1, wherein said compound (B) is a 2,2'-bis(2-oxazoline).

4. A gas-barrier material according to claim 1, wherein said polycarboxylic acid polymer (A) is a poly(meth)acrylic acid or a partly neutralized product thereof.

5. A gas-barrier material according to claim 1, wherein said compound (B) is contained in an amount of 2 to 60 parts by weight per 100 parts by weight of the polycarboxylic acid polymer (A).

6. A gas-barrier material according to claim 1, comprising the polycarboxylic acid polymer (A) and forming two amido ester bonds at the crosslinking portion.

7. A gas-barrier material according to claim 1, wherein metal ionic crosslinking is formed by polyvalent metal ions among the remaining unreacted carboxyl groups.

8. A method of producing a gas-barrier material by forming a metal ionic crosslinking among the remaining unreacted carboxyl groups by treating the gas-barrier material of claim 1 with water containing a polyvalent metal compound.

9. A method of producing a gas-barrier material of claim 1 by mixing together the polycarboxylic acid polyemer (A) having a water content of not larger than 15% and the compound (B).

10. A method of producing a gas-barrier material according to claim 9, wherein a metal ionic crosslinking is formed among the remaining unreacted carboxyl groups by treating, with water containing a polyvalent metal compound, the gas-barrier material formed by mixing said polycarboxylic acid polymer (A) and the compound (B) together.

11. A packing material having a layer of the gas-barrier material of claim 1 on the surface of a plastic base material or between the plastic layers.

12. A packing material according to claim 11, wherein the layer of said gas-barrier material is formed on the surface of a plastic base material via an anchoring layer, or at least one surface thereof is formed between the plastic layers via the anchoring layer.

13. A packing material according to claim 12, wherein said anchoring layer contains an urethane polymer.
